# EUROPEAN PATENT APPLICATION

(11) **EP 4 831 701 A1**
(43) Date of publication of application: **28.10.2026**
(21) Application number: 25905646.3
(22) Date of filing: 11.12.2025
(51) Int. Cl.: G02B 6/036

(54) **SMALL-DIAMETER LOW-LOSS OPTICAL FIBER**

(30) Priority: 06.03.2025 CN 202510265051
(71) Applicant: Zhongtian Technology Fibre Optics Co., Ltd., Nantong, Jiangsu 226000 (CN); Jiangdong Technology Co., Ltd., Nantong, Jiangsu 226400 (CN); JIANGSU ZHONGTIAN TECHNOLOGY CO., LTD., Nantong, Jiangsu 226000 (CN); Zhongtian Technology Advanced Materials Co., Ltd., Jiangsu 226010 (CN)
(72) Inventor: ZHU, Qiansheng, Nantong, Jiangsu 226000 (CN); CAO, Shanshan, Nantong, Jiangsu 226000 (CN); WANG, Zhen, Nantong, Jiangsu 226000 (CN); XUE, Chi, Nantong, Jiangsu 226000 (CN); SHEN, Yichun, Nantong, Jiangsu 226000 (CN)
(74) Representative: Bandpay & Greuter
(86) International application number: PCT/CN2025/141928
(87) International publication number: WO 2026/184177

(57) **Abstract**

The present application relates to the technical field of optical communications, and provides a small-diameter low-loss optical fiber, including: a core layer, a relative refractive index difference Δn₁ thereof ranging from 0.35% to 0.65%; a cladding layer, cladded on the outside of the core layer, including: a first platform layer wrapped outside the core layer, with a relative refractive index difference being: $Δn = {Δn}_{2} + \frac{{Δn}_{3} - {Δn}_{2}}{{r}_{2} - {r}_{1}} \left(r-{r}_{1}\right)$ , where r₁ is a radius of the core layer, r₂ is a radius of the first platform layer, Δn₂ is a relative refractive index difference of an inner surface of the first platform layer, and Δn₃ is a relative refractive index difference of an outer surface of the first platform layer; and a depressed layer wrapped outside the first platform layer, with a relative refractive index difference Δn₄ ranging from -0.4% -0.6%. The small-diameter low-loss optical fiber provided in the present application significantly improves the strength of the optical fiber while maintaining a small size, thereby optimizing the overall performance of the optical fiber.

## Description

This application claims the priority of the Chinese patent application No. 202510265051.5 filed with the China National Intellectual Property Administration on March 6, 2025, entitled "SMALL-DIAMETER LOW-LOSS OPTICAL FIBER", the entire content of which is incorporated herein by reference.

### TECHNICAL FIELD

The present application relates to the technical field of optical communications, and in particular to a small-diameter low-loss optical fiber.

### BACKGROUND

An optical fiber is an elongated flexible material used for transmitting optical signals and is widely used in fields such as communications, medical treatment, and sensing. Its basic structure consists of a core and a cladding, achieving an efficient transmission of optical signals through the principle of total internal reflection.

The performance of an optical fiber not only depends on its material and manufacturing process, but also is closely related to its size and bending resistance. The diameter of an optical fiber generally affects its bending performance and installation flexibility. Bending resistance is a key indicator for evaluating the flexibility and durability of the optical fiber in practical applications. According to bending resistance, optical fibers can be divided into different grades, which are, from low to high, A1, A2 and B3 in sequence.

Currently, an optical fiber with a diameter of 200 micrometers can only achieve A2 grade in bending resistance, and its strength can only meet a strain-screening requirement of 1%, which limits its widespread use in high-stress applications.

### SUMMARY

In view of the above problems, embodiments of the present application provide a small-diameter low-loss optical fiber. While maintaining a small size of the optical fiber, the strength of the optical fiber is significantly improved, and the overall performance of the optical fiber is optimized.

In order to achieve the above object, embodiments of the present application provide the following technical solutions.

A first aspect of the present application provides a small-diameter low-loss optical fiber, including:
a core layer, a relative refractive index difference Δn₁ of the core layer ranging from 0.35% to 0.65%;
a cladding layer, cladded on the outside of the core layer; where the cladding layer includes: a first platform layer, wrapped outside the core layer, a relative refractive index difference of the first platform layer being: $Δn = {Δn}_{2} + \frac{{Δn}_{3} - {Δn}_{2}}{{r}_{2} - {r}_{1}} \left(r-{r}_{1}\right) ;$
where r₁ is a radius of the core layer, r₂ is a radius of the first platform layer, Δn₂ is a relative refractive index difference of an inner surface of the first platform layer, and Δn₃ is a relative refractive index difference of an outer surface of the first platform layer; and
a depressed layer, wrapped outside the first platform layer, a relative refractive index difference Δn₄ of the depressed layer ranging from -0.4% -0.6%.

In a possible implementation, the cladding layer further includes:
a first buffer layer, disposed between the first platform layer and the depressed layer; a relative refractive index difference of the first buffer layer being: $Δn = {Δn}_{3} + \frac{{Δn}_{4} - {Δn}_{3}}{{r}_{3} - {r}_{2}} \left(r-{r}_{2}\right) ;$
where r₃ is a radius of the first buffer layer.

In a possible implementation, the cladding layer further includes:
a second platform layer, wrapped outside the depressed layer, a relative refractive index difference Δn₅ of the second platform layer ranging from - 0.2% to - 0.4%.

In a possible implementation, the cladding layer further includes:
a second buffer layer, disposed between the depressed layer and the second platform layer; a relative refractive index difference of the second buffer layer being: $Δn = {Δn}_{4} + \frac{{Δn}_{5} - {Δn}_{4}}{{r}_{5} - {r}_{4}} \left(r-{r}_{4}\right) ;$
where r₄ is a radius of the depressed layer, and r₅ is a radius of the second buffer layer.

In a possible implementation, the cladding layer further includes:
an outer layer, wrapped outside the second platform layer, a relative refractive index difference Δn₆ of the outer layer being 0.

In a possible implementation, the core layer is doped with an alkali metal ion.

In a possible implementation, the core layer further includes SiO₂, GeO₂ and F, and a ratio of SiO₂, GeO₂, F and the alkali metal ion is (1-a-b-c): a: b: c, where a ranges from 0.5% to 2.5%, b ranges from 0.05% to 0.45%, and c ranges from 0 to 0.25%.

In a possible implementation, the optical fiber further includes: a coating layer, coated on the outside of the cladding layer.

In a possible implementation, the coating layer includes:
an inner coating layer, coated on the outside of the cladding layer, an elastic modulus of the inner coating layer being less than or equal to 0.7 MPa; and
an outer coating layer, coated on the outside of the inner coating layer, an elastic modulus of the outer coating layer being greater than or equal to 750 MPa.

A second aspect of the present application provides an optical fiber drawing apparatus for producing the small-diameter low-loss optical fiber as described above, the optical fiber drawing apparatus including: a drawing furnace; a heat retention device disposed at a side of the drawing furnace where its outlet is located; a coating device disposed at a side of the heat retention device where its outlet is located; a bare fiber measuring device disposed between the drawing furnace and the heat retention device, or disposed between the heat retention device and the coating device, and configured to measure a size of a bare fiber and a center position of the bare fiber.

In a possible implementation, the apparatus further includes: a moisture removal device disposed between the heat retention device and the coating device.

In a possible implementation, the moisture removal device has a moisture removal cavity, the moisture removal cavity communicates with two axial ends of the moisture removal device, and two ends of the moisture removal cavity are respectively an air inlet end and an air extraction end; from a center of the moisture removal cavity to the two ends of the moisture removal cavity, a cross-sectional area of the moisture removal cavity gradually increases.

In a possible implementation, the moisture removal cavity is of a symmetrical structure, and from the center of the moisture removal cavity to the two ends of the moisture removal cavity, a cavity wall of the moisture removal cavity shows an arc transition.

In a possible implementation, the apparatus further includes: a curing device disposed at a side of the coating device where its outlet is located.

A third aspect of the present application provides a self-adaptive adjustment method for an optical fiber drawing center, applied to the optical fiber drawing apparatus as described above, the self-adaptive adjustment method including: adjusting a center of the drawing furnace, a center of the bare fiber measuring device, and a center of the coating device to be in a straight line; measuring the center position of the bare fiber by the bare fiber measuring device, and calculating a center position of the optical fiber based on the center position of the bare fiber; adjusting a position of the bare fiber according to a deviation between the calculated center position of the optical fiber and the center of the coating device, so that a concentricity between the center position of the optical fiber and the center position of the coating device is less than a preset value.

The present application provides a small-diameter low-loss optical fiber, an optical fiber drawing apparatus, and a self-adaptive adjustment method for an optical fiber drawing center. The small-diameter low-loss optical fiber includes a core layer and a cladding layer cladded on the outside of the core layer. The cladding layer includes a first platform layer and a depressed layer. The first platform layer is wrapped outside the core layer, and the depressed layer is wrapped outside the first platform layer. A relative refractive index difference Δn₁ of the core layer ranges from 0.35% to 0.65%. A relative refractive index difference of the first platform layer is: $Δn = {Δn}_{2} + \frac{{Δn}_{3} - {Δn}_{2}}{{r}_{2} - {r}_{1}} \left(r-{r}_{1}\right)$.

In the formula, r₁ is a radius of the core layer, r₂ is a radius of the first platform layer, Δn₂ is a relative refractive index difference of an inner surface of the first platform layer, and Δn₃ is a relative refractive index difference of an outer surface of the first platform layer. A relative refractive index difference Δn₄ of the depressed layer ranges from - 0.4% - 0.6%. In this way, by a gradient design of the relative refractive index differences of the core layer and each portion of the cladding layer, the difference in expansion coefficients of each portion can be effectively reduced. Such an arrangement can ensure that the small-diameter low-loss optical fiber has a sufficient relative refractive index difference while maintaining uniformity of viscosity and stress of the optical fiber, thereby effectively improving the bending resistance of the small-diameter low-loss optical fiber and optimizing the overall performance of the optical fiber.

### BRIEF DESCRIPTION OF DRAWINGS

In order to more clearly illustrate the technical solutions in the embodiments of the present application or in the prior art, the drawings required for the description of the embodiments or the prior art will be briefly introduced below. Obviously, the drawings in the following description are some embodiments of the present application, and for those skilled in the art, other drawings can also be obtained based on these drawings without creative effort.
FIG. 1 is a schematic structural view of a small-diameter low-loss optical fiber provided by an embodiment of the present application.
FIG. 2 is a schematic cross-sectional refractive index structure diagram of a core layer and a cladding layer in a small-diameter low-loss optical fiber provided by an embodiment of the present application.
FIG. 3 is a schematic structural view of an optical fiber drawing apparatus provided by an embodiment of the present application.
FIG. 4 is a schematic structural view of a moisture removal device in an optical fiber drawing apparatus provided by an embodiment of the present application.
FIG. 5 is a flow chart of steps of a self-adaptive adjustment method for an optical fiber drawing center provided by an embodiment of the present application.

Description of Reference Numerals:
10 - small-diameter low-loss optical fiber;
100 - core layer; 200 - cladding layer; 300 - coating layer;
210 - first platform layer; 220 - depressed layer; 230 - first buffer layer; 240 - second platform layer; 250 - second buffer layer; 260 - outer layer; 310 - inner coating layer; 320 - outer coating layer;
20 - optical fiber drawing apparatus;
21 - drawing furnace; 22 - feeder; 23 - heat retention device; 24 - coating device; 25 - moisture removal device; 26 - curing device; 27 - bare fiber measuring device; 28 - optical fiber measuring device; 29 - winding device;
251 - moisture removal cavity; 252 - air inlet end; 253 - air extraction end;
30 - preform rod.

### DESCRIPTION OF EMBODIMENTS

As described in the background art, the performance of an optical fiber is closely related to its size and bending resistance. The principle of bending resistance of an optical fiber refers to that after an optical fiber is bent, the optical energy loss is relatively small and a continuous transmission is still possible. The principle of total reflection is the fundamental principle by which optical energy can be transmitted continuously in an optical fiber. However, in fact, part of the optical energy also propagates in the cladding layer, but its transmitted energy drops sharply as the distance from the core increases.

The phenomenon of bending loss in an optical fiber occurs because the total reflection transmission condition of light is destroyed after the optical fiber is bent, and the refractive indices of different modes and wavelengths are different. At this time, transmission modes that do not satisfy the total reflection condition are converted into leakage modes and radiation modes, resulting in energy loss, which is the microscopic manifestation of bending loss.

As optical fibers have gradually been deployed from the home entrance to indoor rooms, the usage scenarios of optical fibers increase, and the bending radius of optical fibers becomes smaller and smaller. As the bending radius of an optical fiber decreases, its bending loss increases exponentially. Therefore, it is very important to improve the bending resistance of optical fibers.

According to current standards, the bending resistance grades of optical fibers can be divided into G.657.A1, G.657.A2 and G.657.B3 from low to high. Among them, G.657.B3 has the highest bending resistance, is capable of maintaining extremely low loss even at a very small bending radius, and can be used in occasions requiring frequent bending or wiring in narrow spaces to ensure the stability and reliability of signal transmission.

At present, an optical fiber meeting the G.657.B3 grade generally has a size of 245 µm. However, with the increasing shortage of pipeline resources in urban infrastructure and the continuous pursuit of higher data transmission speeds, the market demand for small-sized optical fibers is increasing. The diameter of coated small-sized optical fiber is usually between 180 µm and 200 µm, which is more suitable for modern compact wiring environments.

In view of this, embodiments of the present application provide a small-diameter low-loss optical fiber, an optical fiber drawing apparatus, and a self-adaptive adjustment method for an optical fiber drawing center. The small-diameter low-loss optical fiber includes a core layer and a cladding layer cladded on the outside of the core layer. The cladding layer includes a first platform layer and a depressed layer. The first platform layer is wrapped outside the core layer, and the depressed layer is wrapped outside the first platform layer. Where, a relative refractive index difference Δn₁ of the core layer ranges from 0.35% to 0.65%. A relative refractive index difference of the first platform layer is: $Δn = {Δn}_{2} + \frac{{Δn}_{3} - {Δn}_{2}}{{r}_{2} - {r}_{1}} \left(r-{r}_{1}\right) .$

In the formula, r₁ is a radius of the core layer, r₂ is a radius of the first platform layer, Δn₂ is a relative refractive index difference of an inner surface of the first platform layer, and Δn₃ is a relative refractive index difference of an outer surface of the first platform layer. A relative refractive index difference Δn₄ of the depressed layer ranges from - 0.4% - 0.6%. In this way, by a gradient design of the relative refractive index differences of the core layer and each portion of the cladding layer, the difference in expansion coefficients of each portion can be effectively reduced. Such an arrangement can ensure that the small-diameter low-loss optical fiber has a sufficient refractive index difference while maintaining uniformity of viscosity and stress of the optical fiber, thereby effectively improving the bending resistance of the small-diameter low-loss optical fiber and optimizing the overall performance of the optical fiber.

In order to make the above objectives, features and advantages of the embodiments of the present application more obvious and understandable, the technical solutions in the embodiments of the present application will be clearly and completely described below with reference to the accompanying drawings in the embodiments of the present application. Obviously, the described embodiments are only some of the embodiments of the present application, rather than all of the embodiments. Based on the embodiments in the present application, all other embodiments obtained by those skilled in the art without creative effort shall fall within the scope of protection of the present application.

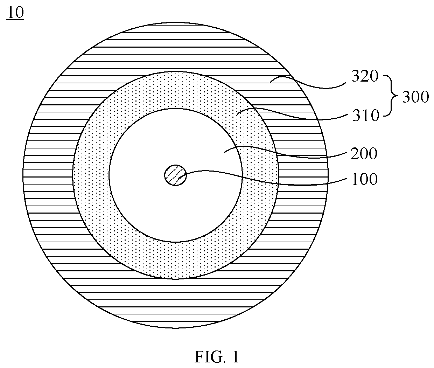

FIG. 1 is a schematic structural view of a small-diameter low-loss optical fiber provided by an embodiment of the present application. Referring to FIG. 1, an embodiment of the present application provides a small-diameter low-loss optical fiber (hereinafter referred to as optical fiber), and the optical fiber 10 can be widely used in modern communication networks. Exemplarily, the optical fiber 10 can be used in FTTH (Fiber to the Home), data centers and urban infrastructures to achieve a high-density wiring in a limited space while ensuring low loss and high bandwidth. In addition, the optical fiber 10 is also suitable for 5G networks, industrial automation, the Internet of Things, as well as aerospace and defense fields, providing reliable connections and efficient data transmission.

Referring to FIG. 1, the optical fiber 10 includes a core layer 100 and a cladding layer 200. The core layer 100 is a central portion of the optical fiber 10, has a relatively high refractive index, and can be used to transmit optical signals. The cladding layer 200 is cladded on the outside of the core layer 100, and can confine the optical signals within the core layer 100 through total internal reflection, provide physical protection, reduce crosstalk, and at the same time enhance the bending resistance of the optical fiber. The core layer 100 and the cladding layer 200 work cooperatively, so that the optical fiber 10 can achieve efficient and reliable optical signal transmission in various applications, meeting the requirements of modern communication networks for high bandwidth and stability.

In this embodiment, by a gradient design of relative refractive index differences of the cladding layer 200 of the optical fiber 10, the strength of the optical fiber 10 is significantly improved while maintaining a small size of the optical fiber 10, so that the optical fiber 10 has better bending resistance, and the optical fiber 10 can reach the G.657B3 bending resistance grade.

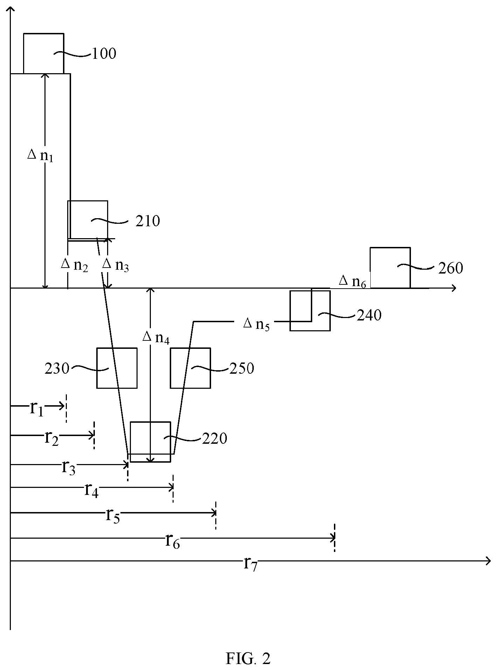

FIG. 2 is a schematic cross-sectional refractive index structure diagram of a core layer and a cladding layer in a small-diameter low-loss optical fiber provided by an embodiment of the present application. Referring to FIG. 2, a radius of the core layer 100 is within r₁, and r₁ ranges from 4.5 µm to 5.5 µm. A main matrix material of the core layer 100 is SiO₂ (silicon dioxide), which has excellent optical transparency and mechanical strength, and its low-loss characteristic enables optical signals to propagate over a long distance in the optical fiber 10 without significant attenuation. It should be noted that in the embodiments of the present application, a refractive index of pure SiO₂ is defined as a reference refractive index, and a relative refractive index difference is a difference between the refractive index of the core layer 100 and the cladding layer 200 and the reference refractive index.

However, during a drawing process of the optical fiber 10, the material of the core layer 100 and the cladding layer 200 needs to be melted at high temperature and formed into a fiber. If the viscosity difference between them is too large, it will cause their material fluidity to be inconsistent, thereby affecting the geometric shape and optical performance of the optical fiber. In addition, an excessive viscosity difference may also lead to a significant difference in the thermal expansion coefficients between the core layer 100 and the cladding layer 200, thereby causing a large internal stress. Therefore, in order to reduce a viscosity of the core layer 100 and reduce a viscosity difference between the core layer 100 and the cladding layer 200, an appropriate amount of alkali metal ions can be doped into the core layer 100 to optimize material properties and improve the overall performance of the optical fiber 10.

Exemplarily, potassium ions (K⁺) may be added to the core layer 100, where K⁺ can destroy the silicon-oxygen bond (Si-O) in a glass network structure, and increase the fluidity of the material, thereby reducing the viscosity of the core layer 100.

In addition, the core layer 100 may further include germanium dioxide (GeO₂) and fluorine (F). The addition of GeO₂ can increase the refractive index of the core layer 100, thereby enhancing the confinement capability of the optical signal in the core layer 100 and improving the bandwidth and transmission efficiency of the optical fiber 10. Moreover, the doping of GeO₂ can also adjust the dispersion characteristics of the optical fiber 10 and optimize its performance at specific wavelengths. The doping of F can be used to reduce the refractive index of the optical fiber 10 and the dispersion of the material, thereby controlling the mode field distribution of the optical fiber 10 and reducing nonlinear effects.

By optimizing a ratio of SiO₂, GeO₂, F and K⁺, low viscosity of the core layer 100 can be achieved while maintaining a high refractive index and low loss. Exemplarily, the ratio of SiO₂, GeO₂, F and K⁺ may be (1-a-b-c): a: b: c, where a ranges from 0.5% to 2.5%, b ranges from 0.05% to 0.45%, and c ranges from 0 to 0.25%.

The relative refractive index difference Δn₁ of the core layer 100 ranges from 0.35% to 0.65%, where a relatively high relative refractive index difference enables the optical signal to propagate efficiently in the core layer 100 through total internal reflection, which helps to improve the bandwidth and transmission efficiency of the optical fiber 10 while reducing signal attenuation.

Continuing to refer to FIG. 2, the cladding layer 200 includes a first platform layer 210 and a depressed layer 220. The first platform layer 210 is wrapped outside the core layer 100 and has a radius of r₂; and a thickness of the first platform layer 210 is r₂ - r₁, which ranges from 3.5 µm to 5.5 µm. The first platform layer 210 may also be composed of SiO₂, GeO₂, F and K⁺, and a ratio of SiO₂, GeO₂, F and K⁺ is (1-a-b-c): a: b: c, where a ranges from 0.2% to 1%, b ranges from 0.05% to 0.2%, and c ranges from 0 to 0.15%.

The first platform layer 210 may be prepared by chemical vapor deposition technology. Exemplarily, the first platform layer 210 may be prepared by methods such as Vapor Phase Axial Deposition (Vapor Phase Axial Deposition, VAD), Modified Chemical Vapor Deposition (Modified Chemical Vapor Deposition, MCVD), and Plasma Chemical Vapor Deposition (Plasma Chemical Vapor Deposition, PCVD), which are not specifically limited in this embodiment.

Continuing to refer to FIG. 2, a relative refractive index difference of the first platform layer 210 is: $Δn = {Δn}_{2} + \frac{{Δn}_{3} - {Δn}_{2}}{{r}_{2} - {r}_{1}} \left(r-{r}_{1}\right) ;$ where Δn₂ is a relative refractive index difference of an inner surface of the first platform layer 210, ranging from 0% to 0.3%; Δn₃ is a relative refractive index difference of an outer surface of the first platform layer 210, ranging from 0% to 0.2%; and r is a position of any point in the first platform layer 210. With such an arrangement, in a radial direction of the optical fiber, a gradient design with stepwise transition of the relative refractive index differences at different positions of the first platform layer 210 achieves a smooth refractive index transition from the core layer 100 to the cladding layer 200, which helps to reduce reflection and scattering of the optical signal at the interlayer interface, improving transmission efficiency and signal quality. Moreover, the gradual change of the relative refractive index difference can effectively reduce the phenomena of internal stress concentration and micro-bending loss of the optical fiber 10, and reduce the risk of fracture of the optical fiber 10 when it is bent, thereby improving the durability and bending resistance of the optical fiber 10.

The depressed layer 220 is wrapped outside the first platform layer 210; a radius of the depressed layer 220 is r₄; and a thickness of the depressed layer 220 is r₄ - r₃, which ranges from 4.5 µm to 10 µm. The depressed layer 220 may be composed of SiO₂ and F, and a ratio of SiO₂ and F is (1-a): a, where a ranges from 1% to 2%. Exemplarily, the depressed layer 220 may be obtained by deposition with one of VAD and MCVD.

The relative refractive index difference of the depressed layer 220 is Δn₄, and Δn₄ ranges from -0.4% to -0.6%. The depressed layer 220 has a relatively low refractive index, which can effectively confine the propagation path of light, and prevent light from leaking to the outside of the cladding layer 200, thereby ensuring that the optical signal is effectively confined and transmitted in the core layer 100.

Continuing to refer to FIG. 2, the cladding layer 200 may further include a first buffer layer 230. The first buffer layer 230 is disposed between the first platform layer 210 and the depressed layer 220, with a radius of r₃ and a thickness of r₃ - r₂, where r₃ - r₂ ranges from 0 µm to 4.5 µm. The first buffer layer 230 may be composed of SiO₂ and F, and a ratio of SiO₂ and F is (1-a): a, where a ranges from 0.5% to 1.5%. The first buffer layer 230 may also be obtained by deposition with one of VAD and MCVD.

A relative refractive index difference of the first buffer layer 230 is: $Δn = {Δn}_{3} + \frac{{Δn}_{4} - {Δn}_{3}}{{r}_{3} - {r}_{2}} \left(r-{r}_{2}\right) ;$ where r is a position of any point in the first buffer layer 230. The first buffer layer 230 can smooth the transition of the relative refractive index difference between the first platform layer 210 and the depressed layer 220, so that the relative refractive index difference between them can change gradually, thereby helping to relieve mechanical stress caused by different thermal expansion coefficients of materials and improving the mechanical stability of the optical fiber 10.

In addition, the cladding layer 200 may further include a second platform layer 240. The second platform layer 240 is disposed outside the depressed layer 220, with a radius of r₆ and a thickness of r₆ - r₅, where r₆ - r₅ ranges from 4.5 µm to 15 µm. The second platform layer 240 may be composed of SiO₂ and F, and a ratio of SiO₂ and F is (1-a): a, where a ranges from 0.2% to 0.6%. The second platform layer 240 may also be obtained by deposition with one of VAD and MCVD.

A relative refractive index difference of the second platform layer 240 is Δn₅, which ranges from -0.2% to -0.4%. The second platform layer 240 can effectively adjust the mode field distribution of the optical fiber 10, so that in the case where a diameter of the core layer 100 is increased to expand the mode field diameter, a cutoff wavelength of an optical cable still remains within a standard range (e.g., below 1260 nm). Thus, it can ensure the normal operation of the optical fiber 10 within a standard waveband.

Continuing to refer to FIG. 2, the cladding layer 200 may further include a second buffer layer 250. The second buffer layer 250 is disposed between the depressed layer 220 and the second platform layer 240. The second buffer layer 250 has a radius of r₅ and a thickness of r₅ - r₄, which ranges from 4.5 µm to 15 µm. The second buffer layer 250 may also be composed of SiO₂ and F, and a ratio of SiO₂ to F is (1-a): a, where a ranges from 0.8% to 1.2%. Exemplarily, the second platform layer 240 may also be obtained by deposition with one of VAD and MCVD.

A relative refractive index difference of the second buffer layer 250 is: $Δn = {Δn}_{4} + \frac{{Δn}_{5} - {Δn}_{4}}{{r}_{5} - {r}_{4}} \left(r-{r}_{4}\right) ;$ where r is a position of any point in the second buffer layer 250. The second buffer layer 250 can further optimize the transition of the relative refractive index difference, reduce optical loss and stress difference in the optical fiber 10, and help to improve the overall transmission performance of the optical fiber 10.

In addition, the cladding layer 200 may further include an outer layer 260 wrapped outside the second platform layer 240. The outer layer 260 can provide excellent mechanical protection and an environmental barrier for the cladding layer 200. The radius of the outer layer 260 is r₆, which ranges from 62 µm to 63 µm. The outer layer 260 may be a pure silicon layer, and its relative refractive index difference is Δn₆ and Δn₆ is 0. Exemplarily, the outer layer 260 may be formed by rapid deposition with an OVD technology using silicon dioxide.

Referring to FIG. 1, the optical fiber 10 further includes a coating layer 300. The coating layer 300 can protect the glass structure of the optical fiber 10 from physical and chemical damage caused by the external environment. A density of the coating layer 300 is 0.95 g/cm to 1.3 g/cm, which can ensure the mechanical properties and optical transparency of the coating layer 300 without adding excessive weight.

Exemplarily, the coating layer 300 may be formed by an acrylic resin coating. The acrylic resin has good optical transparency, which can ensure that the coating layer 300 does not cause interference or loss to the transmission of the optical signal, helping to maintain the high transmission efficiency of the optical fiber 0. In addition, the acrylic resin has good chemical resistance and weather resistance and is capable of resisting erosion by moisture, chemicals and ultraviolet rays; and the acrylic resin can provide strong mechanical protection, effectively resisting external physical damage such as scratches, impacts and bending.

Specifically, the coating layer 300 may include an inner coating layer 310. The inner coating layer 310 is coated on the outside of the cladding layer 200. An elastic modulus of the inner coating layer 310 may be less than or equal to 0.7 MPa, and an elongation at break of the inner coating layer 310 may be greater than or equal to 130%. Low elastic modulus and high elongation at break can impart good flexibility to the inner coating layer 310, so that it can withstand greater bending and stretching without easily breaking during installation and operation, thereby providing a buffering effect for the optical fiber 10, effectively absorbing and relieving external impacts and vibrations, and protecting the core layer 100 and the cladding layer 200 from damage by mechanical stress. In addition, a coating viscosity of the inner coating layer 310 may be set to 1500 mPa·s to 6000 mPa·s to ensure uniformity and stability during the coating process, avoiding an instable performance of the optical fiber caused by non-uniformity of the inner coating layer 310.

The coating layer 300 may further include an outer coating layer 320. The outer coating layer 320 is coated on the outside of the inner coating layer 310. Its elastic modulus may be greater than or equal to 750 MPa, and its elongation at break may be greater than or equal to 10%. High elastic modulus and moderate elongation at break make the outer coating layer 320 have relatively high rigidity, providing strong external protection for the optical fiber 10, and significantly enhancing the overall mechanical strength of the optical fiber 10, so that the optical fiber can resist physical damage due to the external environment. In addition, the outer coating layer 320 has good wear resistance and is capable of resisting wear and tear during long-term use, which enables the optical fiber 10 to maintain its integrity and functionality even under harsh environmental conditions. Of course, the characteristic of high elastic modulus makes the material of the outer coating layer 320 denser, thereby forming an effective barrier to prevent the intrusion of external factors such as moisture, chemicals and ultraviolet rays, and prolonging the service life of the optical fiber 10. A coating viscosity of the outer coating layer 320 may be set to 3000 mPa·s to 8000 mPa·s. A relatively high viscosity can ensure the thickness and uniformity of the outer coating layer 320, thereby providing effective physical and environmental protection for the optical fiber 10.

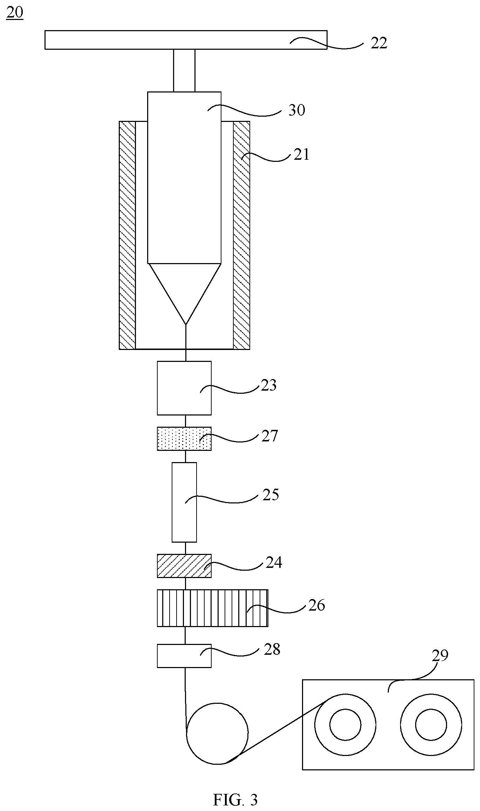

FIG. 3 is a schematic structural view of an optical fiber drawing apparatus provided by an embodiment of the present application. Referring to FIG. 3, an embodiment of the present application further provides an optical fiber drawing apparatus 20, which is configured for producing the optical fiber 10 described above.

The optical fiber drawing apparatus 20 includes a drawing furnace 21. The drawing furnace 21 may be an induction drawing furnace or a graphite drawing furnace, which is not specifically limited in this embodiment. The drawing furnace 21 can provide a stable and efficient heating environment, and can heat a preform rod 30 formed by the core layer 100 and the cladding layer 200 to a softening point, so that the preform rod 30 can be drawn into a bare fiber having a required diameter and optical characteristics under the action of gravity and tension. Exemplarily, a temperature of the drawing furnace 21 may be set to 1900°C to 2300°C.

In order to protect the bare fiber material during the drawing process, the drawing furnace 21 may be filled with a protective gas, such as argon or helium. Alternatively, a mixed gas of argon and helium may be used, where the proportion of argon is not less than 50%. A flow rate of the mixed gas may be controlled at 15 L/min to 40 L/min to maintain a stable gas environment, while the oxygen content may be controlled below 200 ppm to prevent oxidation reactions and ensure the purity and optical performance of the bare fiber material. The drawing speed may be set to not less than 50 m/min to improve production efficiency and ensure consistency in the diameter and optical characteristics of the bare fiber.

A feeder 22 is disposed above the drawing furnace 21. The feeder 22 can be configured to clamp the preform rod 30 and feed the preform rod 30 slowly and stably into the drawing furnace 21 at a set speed.

Continuing to refer to FIG. 3, the optical fiber drawing apparatus 20 further includes a heat retention device 23. The heat retention device 23 is disposed at a side of the drawing furnace 21 where its outlet is located and can provide a stable thermal environment, and help to prevent temperature fluctuations from affecting the diameter and optical performance of the bare fiber, thereby improving production efficiency and product quality.

In addition, the optical fiber drawing apparatus 20 further includes a coating device 24. The coating device 24 is disposed at a side of the heat retention device 23 where its outlet is located and is used for coating the bare fiber. Specifically, the coating method of the coating device 24 for the inner coating layer 310 and the outer coating layer 320 may be selected from at least one of wet-wet coating or wet-dry coating.

The wet-wet coating method generally includes one coating die that can be used for simultaneously coating the inner coating layer 310 and the outer coating layer 320, which can effectively reduce the number of coating steps and improve production efficiency.

The wet-dry coating method generally includes two coating dies, one for coating the inner coating layer 310 and the other for coating the outer coating layer 320. This coating method can better control the quality and thickness of the inner coating layer 310 and the outer coating layer 320, ensuring the uniformity and quality of the inner coating layer 310 and the outer coating layer 320. In actual production, the appropriate coating method may be selected according to requirements, which is not specifically limited in this embodiment.

During coating, a thickness ratio of the inner coating layer 310 to the outer coating layer 320 may be set between 0.67 and 1.2. Exemplarily, the thickness ratio of the inner coating layer 310 to the outer coating layer 320 may be 0.8 - 0.95. Thus, by optimizing the thickness ratio of the inner coating layer 310 to the outer coating layer 320, the performance and durability of the optical fiber 10 can be maximized without increasing the total diameter of the optical fiber 10, so that the optical fiber 10 can resist physical damage due to the external environment while maintaining a certain flexibility to adapt to dynamic environments such as bending and torsion.

It should be noted that after the bare fiber is taken out of the heat retention device 23, due to a high surface temperature of the bare fiber, and a drawing environment generally requires conditions of a relative humidity of 50% - 80% and a temperature of 21°C - 25°C. Such environmental condition helps to reduce dust, but at the same time it causes the outer surface of the bare fiber to be prone to moisture condensation. The presence of moisture will interfere with the uniform adhesion of the coating material, reducing the quality of the coating layer 300 and the mechanical properties of the optical fiber. Therefore, before entering the coating device 24, the surface of the bare fiber may be pretreated to reduce the adhesion of moisture on the bare fiber surface.

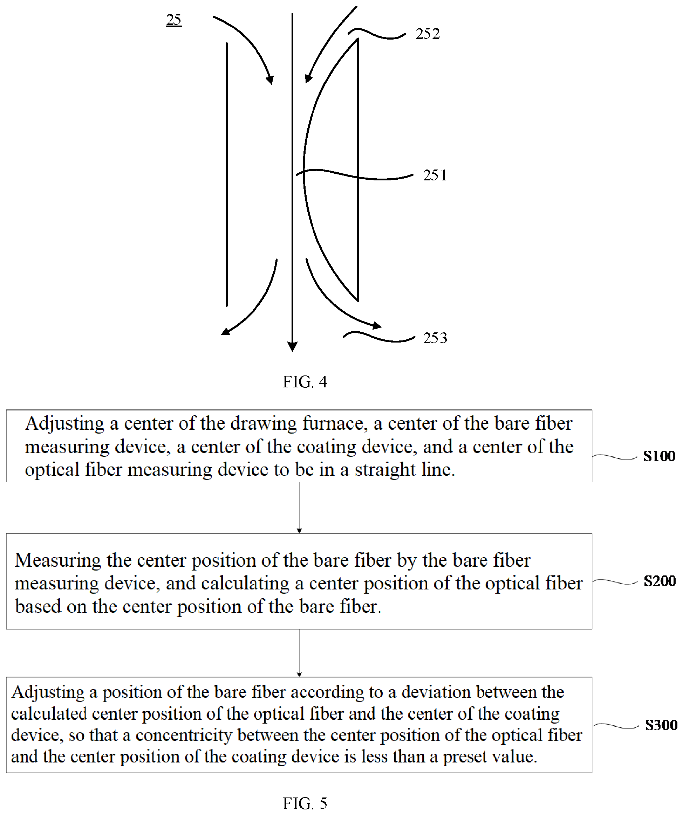

FIG. 4 is a schematic structural view of a moisture removal device in an optical fiber drawing apparatus provided by an embodiment of the present application. Referring to FIG. 4, the optical fiber drawing apparatus 20 may further include a moisture removal device 25. The moisture removal device 25 is disposed between the heat retention device 23 and the coating device 24. The moisture removal device 25 has a moisture removal cavity 251, and the moisture removal cavity 251 communicates with two axial ends of the moisture removal device 25.

The two ends of the moisture removal cavity 251 are respectively an air inlet end 252 and an air extraction end 253. Gas may be injected from the air inlet end 252 and discharged from the air extraction end 253. An air extraction pump (not shown in the figure) is connected below the air extraction end 253, and the air extraction pump can adjust a flow rate of the gas so that the flow rate of the gas is slightly greater than the drawing speed. With such an arrangement, it can be ensured that the gas forms a stable flow state in the moisture removal cavity 251, avoiding fluctuations in the gas flow, facilitating uniform removal of moisture on the surface of the bare fiber, and ensuring that the surface of the optical fiber is dry.

Exemplarily, the gas may be nitrogen or compressed air, and a temperature of the gas may be between 30°C and 300°C. Thus, the high-temperature dry gas can effectively eliminate moisture on the surface of the bare fiber, and an arc-shaped design of the moisture removal cavity 251 can also keep the bare fiber stable when the bare fiber passes through the moisture removal device 25, and prevent the bare fiber stable from shaking, ensuring the uniformity and stability of the subsequent coating process.

The moisture removal cavity 251 may be configured as a structure that is wide at both ends and narrow in the middle. That is, from the center of the moisture removal cavity 251 to two ends of the moisture removal cavity 251, a cross-sectional area of the moisture removal cavity 251 gradually increases. Exemplarily, a length of the moisture removal device 25 may be between 0.5 m and 2 m, a width of the center of the moisture removal cavity 251 may be set to be between 1 cm and 2 cm, and a width of the two ends of the moisture removal cavity 251 may be set to be between 2 cm and 4 cm.

In a possible implementation, the moisture removal cavity 251 may be configured as a symmetrical structure, and from the center of the moisture removal cavity 251 to the two ends of the moisture removal cavity 251, a cavity wall of the moisture removal cavity 251 shows an arc transition structure. Such an arrangement helps to smoothly guide the gas flow, reducing the occurrence of turbulence, and helps to improve the stability of the gas flow. In addition, the design of the arc structure can also make the gas distribution more uniform, thereby enabling the gas to effectively cover the surface of the bare fiber, ensuring a rapid evaporation of moisture on the surface of the bare fiber, and improving the drying efficiency.

Continuing to refer to FIG. 3, the optical fiber drawing apparatus 20 may further be provided with a curing device 26. The curing device 26 can rapidly cure the coating layer 300 through a specific curing process, thereby improving the mechanical strength of the optical fiber. Specifically, the curing process may adopt Ultraviolet Curing (Ultraviolet Curing, UV) or Light Emitting Diode Curing (Light Emitting Diode Curing, LED). In order to improve curing efficiency and quality, the curing environment may be isolated using a non-oxygen gas. Exemplarily, nitrogen, helium, argon, or a mixed gas thereof in any proportion may be used. These gases can effectively prevent the inhibitory effect of oxygen on the curing reaction, ensuring the smooth progress of the curing process.

The curing device 26 may include a plurality of curing furnaces (not shown in the figure). In order to ensure that the gas forms a stable protective atmosphere in the curing furnace, a gas flow rate in a single curing furnace may be controlled at 15 L - 30 L, and an oxygen content in the curing environment is less than 50 ppm to reduce the interference of oxygen on the curing reaction. During the curing process, when the optical fiber 10 passes through different curing furnaces, the time it is being exposed to air should not exceed 0.04 s to prevent the influence of moisture and other contaminants on the surface of the optical fiber. After curing by the curing furnace, a curing degree of the inner coating layer 310 of the optical fiber can reach 87% - 92%, and a curing degree of the outer coating layer 320 needs to reach 90% - 100%, and the curing degree of the outer coating layer 320 shall not be lower than that of the inner coating layer 310. Thus, high-quality curing of the optical fiber coating layer 300 can be ensured, and the mechanical strength and environmental adaptability of the optical fiber 10 can be improved.

In addition, the optical fiber drawing apparatus 20 further includes a bare fiber measuring device 27 and an optical fiber measuring device 28. The bare fiber measuring device 27 is disposed between the drawing furnace 21 and the heat retention device 23, or the bare fiber measuring device 27 may also be disposed between the heat retention device 23 and the coating device 24. The bare fiber measuring device 27 can be configured to measure a center position of a bare fiber. Of course, the bare fiber measuring device 27 also accurately measures a diameter of the drawn bare fiber to ensure that the diameter of the bare fiber meets process requirements. In the embodiments of the present application, the diameter of the bare fiber is a diameter of the outer layer, and ranges from 124 µm to 126 µm.

The optical fiber measuring device 28 is disposed at a side of the coating device 24 where its outlet is located and can measure the coated and cured optical fiber 10 again, including detection of parameters such as diameter and ellipticity, ensuring that the final quality of the optical fiber meets the standards and satisfies the requirements of application fields such as communication field. In the embodiments of the present application, the size of the optical fiber 10 is 180 µm - 200 µm.

Continuing to refer to FIG. 3, the optical fiber drawing apparatus 20 further includes a winding device 29. The winding device 29 is disposed at an end of the optical fiber drawing apparatus 20 and is responsible for neatly winding the optical fiber 10, that has been subjected to drawing, coating and curing, onto a spool, so that the optical fiber 10 can be conveniently stored, transported and further processed. The winding device 29 needs to precisely control the tension and speed of winding to ensure that the optical fiber 10 is not damaged during the winding process. Exemplarily, the winding device 29 may be provided with a tension controller (not shown in the figure), and the tension controller can monitor and adjust the winding tension in real time to ensure that the optical fiber 10 maintains an appropriate tension during the winding process, avoiding loosening or excessive stretching of the optical fiber 10.

FIG. 5 is a flow chart of steps of a self-adaptive adjustment method for an optical fiber drawing center provided by an embodiment of the present application. Referring to FIG. 5, an embodiment of the present application further provides a self-adaptive adjustment method for an optical fiber drawing center (hereinafter referred to as the adjustment method), and the adjustment method is used for the optical fiber drawing apparatus 20 described above.

The optical fiber 10 provided by the embodiment of the present application reduces the thickness of the coating layer 300, thus imposing higher requirements on coating consistency. A cladding layer 200 - coating layer 300 concentricity (i.e., a distance between the center of the cladding layer 200 and the center of the coating layer 300) may be used to evaluate the coating consistency. The smaller the cladding layer 200 - coating layer 300 concentricity, the better the coating consistency. A uniform coating layer 300 can reduce signal loss of the optical fiber when it is slightly bent. Moreover, a uniform coating layer 300 can reduce the phenomenon of stress concentration and improve the overall mechanical strength of the optical fiber 10. The adjustment method, through high-precision measurement and real-time adjustment, can ensure that a center position of the optical fiber 10 during the drawing process remains consistent, thereby improving the uniformity and consistency of the coating layer 300 and ultimately improving the quality and performance of the optical fiber 10.

Specifically, the adjustment method includes the following steps.

S100, adjusting a center of the drawing furnace, a center of the bare fiber measuring device, a center of the coating device, and a center of the optical fiber measuring device to be in a straight line.

First, it should be ensured that the center of the drawing furnace 21, the center of the bare fiber measuring device 27, the center of the coating device 24, and the center of the optical fiber measuring device 28 are in a straight line.

The optical fiber preform rod 30 is moved to the feeder 22, and a position of the feeder 22 is adjusted so that a lower rod tip of the optical fiber preform rod 30 is aligned with the center of the drawing furnace 21.

S200, measuring a center position of the bare fiber by the bare fiber measuring device, and calculating a center position of the optical fiber based on the center position of the bare fiber.

The center position of the bare fiber is measured by the bare fiber measuring device 27, where it is assumed that a bare fiber measurement period is t (indicating that a point position is measured once every t time). When the number of measurement points reaches n (50 ≤ n ≤ 500), a central control system starts to automatically calculate the center position of the optical fiber 10 based on the statistical data. Exemplarily, a K-point center algorithm may be used to obtain an optimal value through iteration, thereby obtaining a relatively most accurate center position of the optical fiber 10.

S300, adjusting a position of the bare fiber according to a deviation between the calculated center position of the optical fiber and the center of the coating device, so that a concentricity between the center position of the optical fiber and the center position of the coating device is less than a preset value.

The central control system sends an adjustment instruction according to the deviation value between the calculated center position of the optical fiber 10 and the center of the coating device 24, and controls the feeder 22 to make an adjustment. The feeder 22 achieves precise position adjustment through a stepping motor (not shown in the figure) and a lead screw (not shown in the figure) to ensure that a concentricity value between the center position of the optical fiber 10 and the center position of the coating device 24 is less than a preset value of 5 µm. Exemplarily, a preset value of concentricity may be set to 2 µm, which can ensure the uniformity of the coating layer 300, helping to improve the overall performance, durability and reliability of the optical fiber 10.

It should be noted that during the movement of the preform rod 30, a moving speed of the feeder 22 is controlled within 0.5 mm/s, which can ensure the accuracy and stability of the adjustment. The entire movement of the preform rod 30 is completed within a preset time nt.

Taking nt as one cycle, the above measurement and adjustment operations are repeated, thereby ensuring that the concentricity value between the center position of the optical fiber 10 and the center position of the coating device 24 is always kept within a preset range. Through this adjustment method, the coating consistency of the optical fiber 10 can be significantly improved, signal attenuation can be reduced, and mechanical strength and environmental adaptability can be improved, thereby ensuring the high performance and stability of the optical fiber 10 under various working conditions.

Each embodiment or implementation in this specification is described in a progressive manner, with each embodiment focusing on the differences from other embodiments, and the same or similar parts between various embodiments may be referred to each other.

In the description of this specification, descriptions with reference to the terms "one implementation", "some implementations", "an illustrative implementation", "an example", "specific example", or "some examples" or the like mean that a specific feature, structure, material, or characteristic described in connection with the implementation or example is included in at least one implementation or example of the present application. In this specification, the schematic expressions of the above terms do not necessarily refer to the same implementation or example. Moreover, the described specific features, structures, materials, or characteristics may be combined in any suitable manner in any one or more implementations or examples.

Finally, it should be noted that the above embodiments are only used to illustrate the technical solutions of the present application, and are not intended to limit them. Although the present application has been described in detail with reference to the foregoing embodiments, those skilled in the art should understand that they can still modify the technical solutions described in the foregoing embodiments, or equivalently replace some or all of the technical features thereof; and these modifications or replacements do not cause the essence of the corresponding technical solutions to depart from the scope of the technical solutions of the embodiments of the present application.

## Claims

1. A small-diameter low-loss optical fiber, comprising:
a core layer, a relative refractive index difference Δn₁ of the core layer ranging from 0.35% to 0.65%;
a cladding layer, cladded on an outside of the core layer; wherein the cladding layer comprises:
a first platform layer, wrapped outside the core layer, a relative refractive index difference of the first platform layer being: $Δn = {Δn}_{2} + \frac{{Δn}_{3} - {Δn}_{2}}{{r}_{2} - {r}_{1}} \left(r-{r}_{1}\right) ;$
wherein r₁ is a radius of the core layer, r₂ is a radius of the first platform layer, Δn₂ is a relative refractive index difference of an inner surface of the first platform layer, and Δn₃ is a relative refractive index difference of an outer surface of the first platform layer; and
a depressed layer, wrapped outside the first platform layer, a relative refractive index difference Δn₄ of the depressed layer ranging from -0.4% -0.6%.

2. The small-diameter low-loss optical fiber according to claim 1, wherein the cladding layer further comprises:
a first buffer layer, disposed between the first platform layer and the depressed layer;
a relative refractive index difference of the first buffer layer being: $Δn = {Δn}_{3} + \frac{{Δn}_{4} - {Δn}_{3}}{{r}_{3} - {r}_{2}} \left(r-{r}_{2}\right) ;$
wherein r₃ is a radius of the first buffer layer.

3. The small-diameter low-loss optical fiber according to claim 1, wherein the cladding layer further comprises:
a second platform layer, wrapped outside the depressed layer, a relative refractive index difference Δn₅ of the second platform layer ranging from - 0.2% to - 0.4%.

4. The small-diameter low-loss optical fiber according to claim 3, wherein the cladding layer further comprises:
a second buffer layer, disposed between the depressed layer and the second platform layer;
a relative refractive index difference of the second buffer layer being: $Δn = {Δn}_{4} + \frac{{Δn}_{5} - {Δn}_{4}}{{r}_{5} - {r}_{4}} \left(r-{r}_{4}\right) ;$
wherein r₄ is a radius of the depressed layer, and r₅ is a radius of the second buffer layer.

5. The small-diameter low-loss optical fiber according to claim 3, wherein the cladding layer further comprises:
an outer layer, wrapped outside the second platform layer, a relative refractive index difference Δn₆ of the outer layer being 0.

6. The small-diameter low-loss optical fiber according to any one of claims 1 to 5, wherein the core layer is doped with an alkali metal ion.

7. The small-diameter low-loss optical fiber according to claim 6, wherein the core layer further comprises SiO₂, GeO₂ and F, and a ratio of SiO₂, GeO₂, F and the alkali metal ion is (1-a-b-c): a: b: c, wherein a ranges from 0.5% to 2.5%, b ranges from 0.05% to 0.45%, and c ranges from 0 to 0.25%.

8. The small-diameter low-loss optical fiber according to any one of claims 1 to 5, further comprising:
a coating layer, coated on an outside of the cladding layer.

9. The small-diameter low-loss optical fiber according to claim 8, wherein the coating layer comprises:
an inner coating layer, coated on the outside of the cladding layer, an elastic modulus of the inner coating layer being less than or equal to 0.7 MPa; and
an outer coating layer, coated on an outside of the inner coating layer, an elastic modulus of the outer coating layer being greater than or equal to 750 MPa.

10. An optical fiber drawing apparatus for producing the small-diameter low-loss optical fiber according to any one of claims 1 to 9, wherein the optical fiber drawing apparatus comprises:
a drawing furnace;
a heat retention device, disposed at a side of the drawing furnace where its outlet is located;
a coating device, disposed at a side of the heat retention device where its outlet is located;
a bare fiber measuring device, disposed between the drawing furnace and the heat retention device or disposed between the heat retention device and the coating device, and configured to measure a size of a bare fiber and a center position of the bare fiber.

11. The optical fiber drawing apparatus according to claim 10, further comprising:
a moisture removal device, disposed between the heat retention device and the coating device.

12. The optical fiber drawing apparatus according to claim 10, wherein the moisture removal device has a moisture removal cavity, the moisture removal cavity communicates with two axial ends of the moisture removal device, and two ends of the moisture removal cavity are respectively an air inlet end and an air extraction end;
from a center of the moisture removal cavity to the two ends of the moisture removal cavity, a cross-sectional area of the moisture removal cavity gradually increases.

13. The optical fiber drawing apparatus according to claim 12, wherein the moisture removal cavity is of a symmetrical structure; and from the center of the moisture removal cavity to the two ends of the moisture removal cavity, a cavity wall of the moisture removal cavity shows an arc transition.

14. The optical fiber drawing apparatus according to any one of claims 10 to 13, further comprising:
a curing device, disposed at a side of the coating device where its outlet is located.

15. A self-adaptive adjustment method for an optical fiber drawing center, applied to the optical fiber drawing apparatus according to any one of claims 10 to 13, wherein the self-adaptive adjustment method comprises:
adjusting a center of the drawing furnace, a center of the bare fiber measuring device, and a center of the coating device to be in a straight line;
measuring the center position of the bare fiber by the bare fiber measuring device, and calculating a center position of the optical fiber based on the center position of the bare fiber;
adjusting a position of the bare fiber according to a deviation between the calculated center position of the optical fiber and the center of the coating device, so that a concentricity between the center position of the optical fiber and the center position of the coating device is less than a preset value.
